# FASCICULE DE BREVET EUROPEEN

(11) **EP 0 416 077 B1**
(45) Date de publication et mention de la délivrance du brevet: **10.08.1994**
(21) Numéro de dépôt: 90904847.2
(22) Date de dépôt: 06.03.1990
(51) Int. Cl.: B09B 3/00, B65B 69/00

(54) **PROCEDE DE DESTRUCTION DES BOITIERS AEROSOLS**
VERFAHREN ZUR VERNICHTUNG VON SPRÜHDOSEN
METHOD FOR DESTROYING AEROSOL CANS

(30) Priorité: 06.03.1989 FR 8902917
(43) Date de publication de la demande: 13.03.1991
(73) Titulaire: SERVICES DANS LA REHABILITATION DES DECHETS, FR-78510 Triel-sur-Seine (FR); ROBIC, Pierre, F-93800 Epinay-sur-Seine (FR)
(72) Inventeur: Nugues, Francois, F-78570 Andresy (FR); Robic, Pierre, F-93800 Epinay-sur -Seine (FR)
(74) Mandataire: Thibon-Littaye, Annick
(86) Numéro de dépôt international: FR9000150
(87) Numéro de publication internationale: WO9010507

(56) Documents cités:
- EP-A- 0 020 040
- FR-A- 2 482 556
- US-A- 3 333 735
- US-A- 3 828 976
- US-A- 4 349 054
- US-A- 4 690 180

## Description

La présente invention concerne un procédé de destruction des boîtiers aérosols permettant leur vidage complet, la récupération, la séparation des divers éléments contenus sans pertes et les dispositifs automatiques ou non, pour la mise en oeuvre du procédé de destruction ainsi que la machine de perçage automatique.

L'invention se rattache au secteur industriel de la récupération et revalorisation des déchets, avec, comme caractéristique première, le vidage des aérosols ; le reconditionnement des produits dangereux ou non, sans pertes, sans intervention humaine et sans pollution pour l'homme ou son environnement. A ce titre, il y a lieu de rappeler que dans les conditions actuelles, la destruction des aérosols se fait par broyage, sans récupération aucune des gaz contenus tels que les C.F.C., gaz d'hydrocarbures, gaz de l'air,... par mise en décharges, ou enfouissement en l'état sans traitement préalable.

On connait par le document US-A-4,349,054 un procédé de destruction permettant, au moyen d'une aiguille creuse de percer les boîtiers sous pression, de transférer le contenu du boîtier dans une enceinte, assurant la séparation des mélanges jus et gaz propulseur, et d'en restituer les différents éléments.

Le problème essentiel que pose la mise en oeuvre d'un tel procédé est d'éviter à tout moment qu'une partie du contenu (gaz et liquide) du boîtier ne se répande dans l'atmosphère, que ce soit durant la période de perçage et de vidage du boîtier, ou lorsque l'aiguille est retirée d'un boîtier vidé de son contenu, notamment pour permettre l'approche et le traitement d'un autre boîtier.

L'art antérieur précité propose de solutionner ce problème en disposant et en maintenant autour du point de perçage du boîtier, un milieu inerte liquide ou gazeux, et en empêchant tout échappement de gaz depuis l'enceinte lorsque l'aiguille est retirée du boîtier, en réalisant la fermeture automatique de l'orifice par lequel l'aiguille creuse communique avec ladite enceinte.

Une telle solution nécessite d'incorporer à la machine de nombreux organes supplémentaires rendant cette dernière plus onéreuse et augmentant les risques de panne.

L'invention a notamment pour but de remédier à cet inconvénient.

Ce but est atteint du fait que, selon la revendication 1, on empêche tout échappement du contenu du boîtier dans l'atmosphère en :
- réalisant, pendant la période dite de transfert, allant depuis le moment du perçage jusqu'au retrait du poinçon par rapport au boîtier, une étanchéité entre ce dernier et le poinçon, et
- en empêchant à tout moment tout reflux de fluide de l'enceinte de récupération vers le poinçon.

L'invention concerne aussi une machine selon la revendication 4 pour la mise en oeuvre du procédé de destruction de boîtiers d'aérosol, du type comportant, montés sur un châssis support, des moyens d'acheminement et d'alimentation des boîtiers d'aérosol, des moyens réglables pour l'introduction et le maintien sans déformation desdits boîtiers, et des moyens pour le perçage des boîtiers aérosol et l'extraction de leur contenu, ces derniers moyens comportant une aiguille creuse reliée à une enceinte de récupération par une liaison, caractérisée en ce qu'un dispositif d'étanchéité de forme adaptée à l'aiguille et au boîtier, comprenant au moins un cylindre de caoutchouc, est interposé entre le boîtier et l'aiguille.

Selon une caractéristique de l'invention, le procédé permet de restituer des boîtiers vides non souillés à l'extérieur par leur contenu initial.

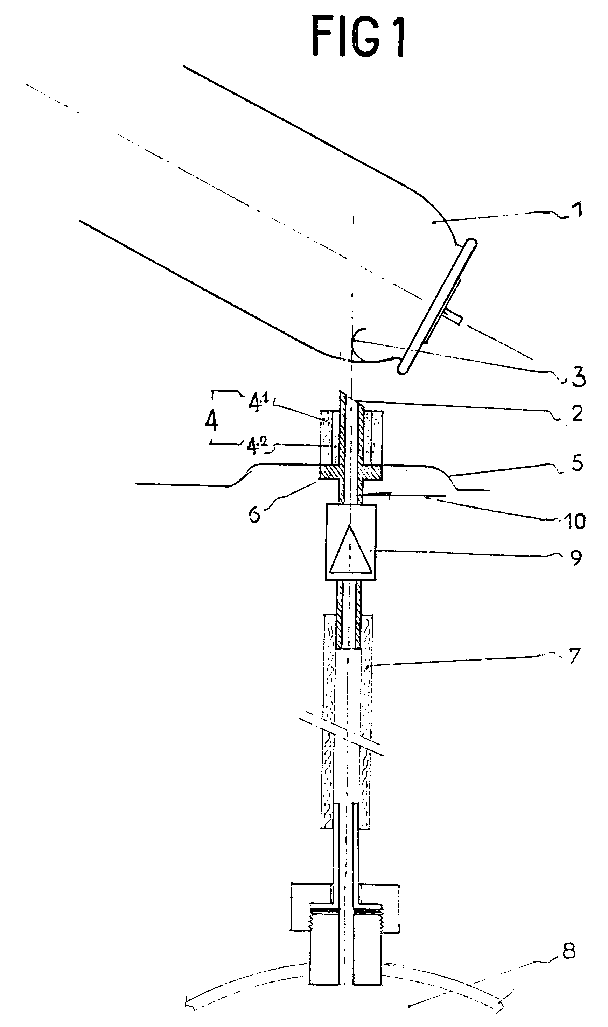

Pour bien fixer l'objet de l'invention sans toutefois le limiter aux figures des dessins où la figure 1 est une vue de face, en coupe transversale, illustrant le principe de transfert au moyen d'une aiguille creuse du contenu d'un aérosol.

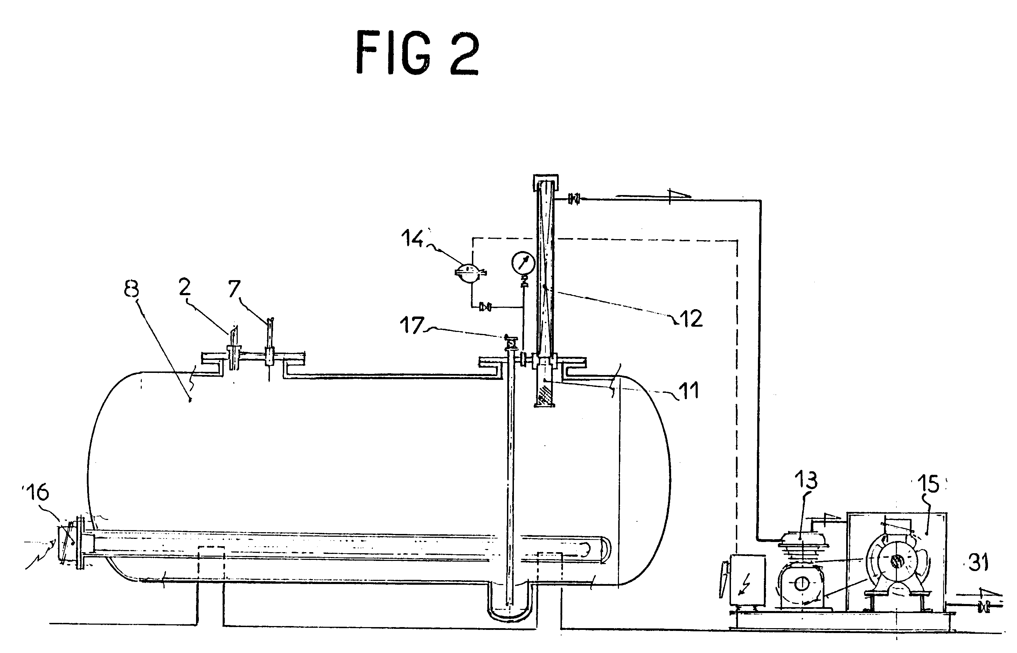

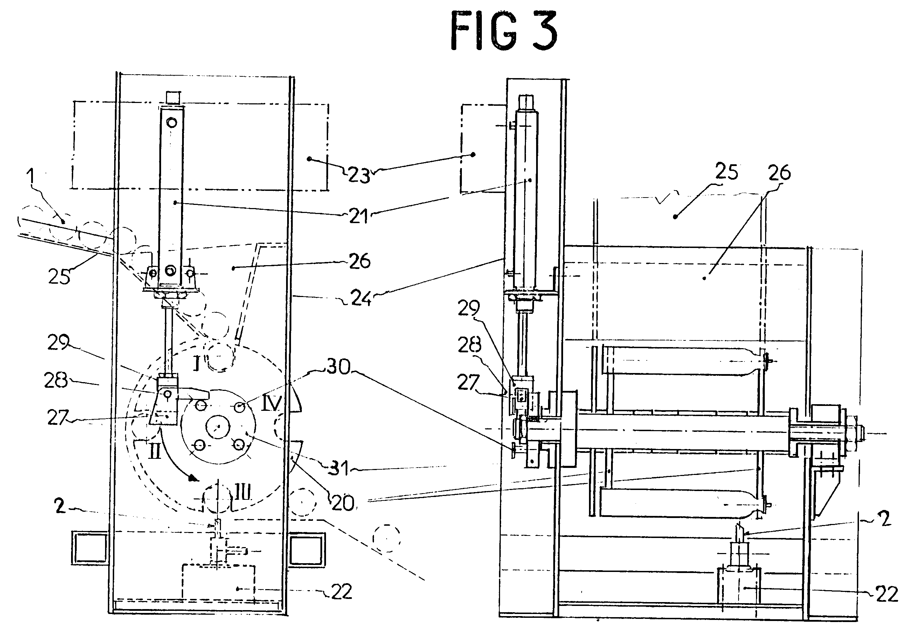

La figure 2 est une vue de face, en coupe longitudinale, illustrant les différents dispositifs nécessaires à la mise en oeuvre du procédé. La figure 3 est une vue de face et une vue en élévation de la machine automatique de perçage des aérosols.

Afin de rendre plus concret l'objet de l'invention on le décrit maintenant d'une manière non limitative, illustrée aux figures des dessins et l'on insérera le procédé selon l'invention.

Fig. 1 "l'aérosol" (1) est présenté au droit d'une aiguille creuse (2) , en acier ou tout autre matière, de sorte que par un mouvement de l'aérosol, de l'aiguille, ou des deux à la fois, l'aiguille pénètre dans l'aérosol. L'aiguille est affûté de telle sorte qu'elle pénètre dans le boîtier avec une découpe totale, partielle, avec ou sans opercule, en évitant que cet opercule (3) obstrue l'aiguille. Une étanchéité (4) , éliminant les fuites vers l'extérieur du système, est interposée entre l'ensemble boîtier/aiguille et l'extérieur.

A titre d'exemple, l'étanchéité peut être constituée d'un complexe formé de deux cylindres de caoutchouc, de dureté différente, le plus dur entourant le cylindre de caoutchouc le moins dur. Cet ensemble a une forme adaptée à celle de l'aiguille et de l'aérosol. Dans sa forme de réalisation suivant la fig. 1, l'aérosol est maintenu incliné vers le bas afin de créer un point bas au niveau du rétreint du boîtier (1), cette disposition permettant un bon transfert en se servant d'une partie rigide du boîtier limitant ainsi les déformations lors du perçage. Un film (5) peut être interposé entre l'étanchéité (4) et l'épaulement (6), dispositif permettant de collecter les égouttures éventuelles, pouvant intervenir en fin de vidage, lors de la séparation du boîtier et de l'aiguille. L'épaulement (6) de l'aiguille (2) est raccordée à la cuve de séparation (8) par une tubulure (7) souple ou rigide permettant le transfert des contenus des boîtiers dans la cuve. La tubulure (7) est équipée d'une clapet antiretour (9) éliminant les risques de fuites et donc le contact entre l'atmosphère et les produits recueillis, de plus un orifice (10) disposé entre l'épaulement (6) de l'aiguille et le clapet (9) autorise l'injection du produit de façon convenable, assurant un balayage de l'espace compris entre le clapet et l'atmosphère, un balayage peut être établie par une fuite contrôlée au droit du clapet.

La fig. 2 , donne à titre d'exemple, non limitatif, les différents dispositifs permettant la mise en oeuvre du procédé objet de l'invention. Tel que décrit ci-dessus en fig. 1, l'aiguille creuse (2) raccordée sur la cuve de réception (8) assure le transfert des contenus, c-à-d, gaz propulsant et jus du boîtier aérosol (1) dans la cuve de réception (8). Une des caractéristiques, selon l'invention, réside dans le fait que, la mise en communication des deux enceintes se trouvent à des pressions très différentes, la détente qui en résulte est utilisée pour assurer la séparation de mélange gaz et jus. Les gaz ainsi détendus sont aspirés au travers d'un filtre (11), puis d'une colonne antigouttelette, ou anneau Rachig (12) au moyen d'un compresseur (13) asservi à la pression de la cuve (8) par un pressostat (14), puis comprimés et reliquefiés au travers d'un condenseur à air (15) dans des conditions de pression et de température correspondants aux gaz concernés. Ils sont ensuite transférés dans des cuves de stockage (31) non représentées sur la fig. 2.Les jus récupérés en fond de cuve (8) , pouvant contenir des gaz dissous, sont réchauffés au moyen d'un échangeur (16); le gaz ainsi vaporisé est repris par le compresseur (13) dans les conditions décrites ci-dessus. Après dégazage, les jus seront évacués au travers de la tubulure (17) et reconditionnés pour emploi, traitement ultérieur ou destruction.

Une autre caractéristique de l'invention est de réaliser une machine automatique de perçage des aérosols tel que illustré par la fig. 3 et donnée à titre d'exemple non limitatif d'une forme de réalisation de l'invention.

La machine est principalement constituée par unbarillet tournant (20) comportant quatre loges pouvant recevoir un boîtier aérosol (1), d'un vérin double effet (21) assurant la rotation du barillet (20), d'un vérin double effet (22) équipé d'une aiguille creuse (2), déjà décrite fig. 1, un dispositif de régulation pneumatique (23) assurant le fonctionnement synchronisé des vérins (21) et (22) ainsi que les temporisations nécessaires. L'ensemble étant installé sur un châssis support (24).

Les aérosols disposés sur une rampe inclinée (25) sont dirigés vers une trémie d'alimentation (26). Incliné sur l'horizontale, le barillet est pourvu de quatre loges adaptées aux dimensions de l'aérosol, qui vient s'y loger, sous l'effet du vérin double effet (21) agissant dans le plan vertical et par l'intermédiaire d'un doigt (27) pivotant sur l'axe (28) porté par la chape (29) elle même solidaire de la tige du vérin (21). Le barillet (20) est mis en rotation par poussée vers le bas du doigt (27) sur l'un des quatre pions (30) également répartis sur un disque d'entraînement (31) solidaire du barillet (20). La rotation par quart de tour successif, déplace l'aérosol de la position I d'alimentation, à la position II intermédiaire, et à la position III de perçage; position dans laquelle une aiguille creuse (2) sous l'action d'un vérin double effet (22) agissant dans le plan vertical perce l'enveloppe de l'aérosol autorisant son vidage et le transfert des contenus au travers de l'aiguille creuse (2) dans les conditions déjà décrites ci-dessus Fig. 1 Les mouvements relatifs des vérins (21) et (22) sont assurés par une alimentation et régulation pneumatique (23) permettant la synchronisation et temporisation de ceux-ci, ainsi que la mise en accord avec le temps de vidange de l'aérosol traité. En fin de perçage, le vérin (22) s'efface sortant l'aiguille de l'aérosol et autorise la rotation d'un quart de tour du barillet (20), une nouvelle rotation provoquant simultanément l'extraction de l'aérosol vide entre la position III et IV, la mise en position III pour perçage de l'aérosol suivant et l'admission dans la trémie d'alimentation (26) d'un nouvel aérosol.

Il est bien évident que sans pour autant sortir du contexte inventif décrit selon le procédé de destruction, d'autres modifications peuvent être apportées à la machine en vue d'une même opération.

L'invention ne se limite aucunement à celui de ses modes d'application non plus qu'à ceux des modes de réalisations de ses diverses parties ayant plus spécialement été indiquées, mais elle embrasse toutes les variantes conformes aux revendications.

## Revendications

1. Procédé de destruction de boîtier d'aérosol, du type selon lequel :
- on réalise dans le boîtier (1) un orifice par perçage au moyen d'une aiguille creuse (2) ;
- on extrait par cet orifice le contenu liquide et gazeux du boîtier ;
- on transfère ce contenu dans une enceinte de récupération (8) ; et
- on sépare en cet endroit le gaz du liquide ;
caractérisé en ce qu'on empêche tout échappement du contenu du boîtier dans l'atmosphère en :
- réalisant, pendant la période dite de transfert, allant depuis le moment du perçage jusqu'au retrait du poinçon par rapport au boîtier, une étanchéité entre ce dernier et le poinçon, et
- en empêchant à tout moment tout reflux de fluide de l'enceinte de récupération vers le poinçon ; et en ce qu'on aspire de l'enceinte les gaz produits par détente dans l'enceinte (8) et/ou libérés par un réchauffage éventuel des liquides récupérés en fond de l'enceinte (8) ; les liquides étant évacués séparément de l'enceinte (8).

2. Procédé de destruction selon la revendication 1, caractérisé en ce que, pendant la période de transfert, on maintient le boîtier d'aérosol avec son axe longitudinal incliné vers le bas et on réalise le perçage du boîtier en un endroit situé au point bas de ce dernier.

3. Procédé selon l'une des revendications précédentes, caractérisé en ce qu'on reconditionne les gaz et les liquides extraits de ladite enceinte pour traitement éventuel ou destruction.

4. Machine pour la mise en oeuvre du procédé de destruction selon l'une des revendications précédentes, du type comportant, montés sur un châssis support (24), des moyens (25, 26) d'acheminement et d'alimentation des boîtiers d'aérosol, des moyens réglables (20 à 25) pour l'introduction et le maintien sans déformation desdits boîtiers, et des moyens (2, 6 à 9, 20, 21, 22, 23) pour le perçage des boîtiers aérosol et l'extraction de leur contenu, ces derniers moyens comportant une aiguille creuse (2) reliée à une enceinte de récupération (8) par une liaison (7), caractérisée en ce qu'un dispositif d'étanchéité (4) de forme adaptée à l'aiguille (2) et au boîtier (1), comprenant au moins un cylindre de caout-chouc, est interposé entre le boîtier (1) et l'aiguille (2).

5. Machine selon la revendication 4, caractérisée en ce qu'un clapet anti-retour (9) est interposé dans ladite liaison (7) afin d'interdire tout reflux de liquide et gaz de ladite enceinte (8) vers ladite aiguille (2).

6. Machine selon l'une des revendications 4 et 5, caractérisée en ce que ledit dispositif d'étanchéité (4) comprend deux cylindres de caoutchouc coaxiaux et contigus dont l'un entoure l'autre (4.1, 4.2) de duretés différentes.

7. Machine selon l'une quelconque des revendications 4 à 6, caractérisée en ce que leidt dispositif d'étanchéité (4) est interposé entre le boîtier (1) et un épaulement (6) de l'aiguille (2).

8. Machine selon l'une quelconque des revendications 4 à 7, caractérisée en ce qu'elle comporte en outre un compresseur (13) asservi à la pression de l'enceinte de récupération (8) au moyen d'un pressostat (14) pour extraire par aspiration les gaz contenus dans ladite enceinte (8).

9. Machine selon l'une quelconque des revendications 4 à 8, caractérisée en ce que l'aiguille (2) est pourvue d'un orifice d'injection (10) permettant d'assurer dans ladite aiguille un balayage avec le produit aérosol.

10. Machine selon l'une quelconque des revendications 4 à 9, caractérisée en ce que lesdits moyens d'introduction et de maintien des boîtiers (1) comprennent un barillet (20) incliné sur l'axe horizontal et pourvu d'une pluralité de loges adaptées et réglables aux dimensions des boîtiers.

## Claims

1. A method of destroying aerosol containers of the type wherein:
- an orifice is formed in the container (1) by piercing with a hollow needle (2);
- the liquid and gaseous contents of the container are extracted via this orifice;
- said contents are transferred to a recovery chamber (8); and
- the gas is separated from the liquid at that place;
characterised in that any escape of the container contents to atmosphere is prevented by:
- providing a seal between the container and the needle for the entire transfer period from the instant of piercing until withdrawal of the needle from the casing, and
- by preventing at all times any reflux of fluid from the recovery chamber to the needle; and in that the gases produced by expansion in the chamber (8) and/or liberated by any reheating of the liquids recovered at the bottom of the chamber (8) are suction-extracted from the chamber; the liquids being discharged separately from the chamber (8).

2. A destruction method according to claim 1, characterised in that during the transfer period the aerosol container is held with its longitudinal axis inclined downwardly and the container is pierced at a place situated at the low-down point of the container.

3. A method according to claim 1 or 2, characterised in that the gases and liquids extracted from the said chamber are reconditioned for possible processing or destruction.

4. A machine for performing the destruction method according to any one of the preceding claims, of the type comprising, mounted on a supporting frame (24), means (25, 26) for bringing up and supplying aerosol containers, variable means (20 to 25) for introducing and holding said containers without deformation, and means (2, 6 to 9, 20, 21, 22, 23) for piercing the aerosol containers and extracting their contents, the latter means comprising a hollow needle (2) connected to a recovery chamber (8) by a connection (7), characterised in that a sealing means (4) of a form adapted to the needle (2) and to the container (1), comprising at least one rubber cylinder, is interposed between the container (1) and the needle (2).

5. A machine according to claim 4, characterised in that a non-return valve (9) is interposed in said connection (17) in order to prevent any reflux of liquid and gas from said chamber (8) to said needle (2).

6. A machine according to claim 4 or 5, characterised in that the said sealing means (4) comprises two coaxial and contiguous rubber cylinders, one of which surrounds the other (4.1, 4.2) and of different hardnesses.

7. A machine according to any one of claims 4 to 6, characterised in that the said sealing means (4) is interposed between the container (1) and a shoulder (6) of the needle (2).

8. A machine according to any one of claims 4 to 7, characterised in that it also comprises a compressor (13) controlled to the pressure of the recovery chamber (8) by means of a pressostat (14) in order to extract by suction the gases contained in the said chamber (8).

9. A machine according to any one of claims 4 to 8, characterised in that the needle (2) is provided with an ejection orifice (10) allowing the said needle to be scavenged with the aerosol product.

10. A machine according to any one of claims 4 to 9, characterised in that the said means for introducing and holding the containers (1) comprise a drum (20) inclined to the horizontal and provided with a plurality of chambers adapted and adjustable to the dimensions of the containers.

## Patentansprüche

1. Verfahren zur Vernichtung von Sprühdosen entsprechend der folgenden Ausführung:
man schafft in der Dose (1) eine Öffnung durch Lochung mit Hilfe einer Hohlnadel (2);
man entzieht durch diese Öffnung den flüssigen und gasförmigen Inhalt der Dose;
man leitet diesen Inhalt in einen Rückgewinnungsbehälter (8) über; und
man trennt an diesem Platz das Gas von der Flüssigkeit;
**dadurch gekennzeichnet,**
daß man jegliches Entweichen des Doseninhalts in die Atmosphäre verhindert, indem man
während der genannten Überleitungsperiode beginnend im Moment der Lochung bis zum Zurückziehen der Nadel in Bezug auf die Dose eine Undurchlässigkeit zwischen der Dose und der Nadel schafft und
in jedem Moment jeden Fluidrückfluß aus dem Rückgewinnungsbehälter in Richtung auf die Nadel verhindert; und
indem man vom Behälter die Gasprodukte durch Entspannung in dem Behälter (8) absaugt und/oder durch eine eventuelle Wiedererhitzung der zurückgewonnenen Flüssigkeiten am Boden des Behälters (8) freisetzt; wobei die Flüssigkeiten separat aus dem Behälter (8) abgeführt werden.

2. Verfahren zur Vernichtung nach Anspruch 1,
**dadurch gekennzeichnet,**
daß man während der Überleitungsperiode die Sprüh- bzw. Aerosoldose mit ihrer Längsachse nach unten geneigt hält und die Lochung der Dose an einer Stelle anbringt, die am Tiefpunkt der letzteren liegt.

3. Verfahren nach einem der vorangehenden Ansprüche,
**dadurch gekennzeichnet,**
daß man die aus dem genannten Behälter herausgezogenen Gase und Flüssigkeiten für eine etwaige Behandlung oder Zerstörung wieder aufbereitet.

4. Maschine zum Ausführen des Verfahrens zur Vernichtung nach einem der vorangehenden Ansprüche, einer Art, die befestigt auf einem Trägergestell (24), Mittel (25, 26) zum Weiterleiten und zum Zuführen der Sprühdosen, regelbare Mittel (20 bis 25) zum Zuführen und verformungslosen Unterstützen der genannten Dosen, und Mittel (2, 6 bis 9, 20, 21, 22, 23) für die Lochung der Sprühdosen und das Absaugen ihres Inhaltes enthält, wobei letztere Mittel eine mit einem Rückgewinnungsbehälter (8) durch ein Verbindungsstück (7) verbundene Hohlnadel (2) enthalten,
**gekennzeichnet durch**
eine in der Form an die Nadel (2) und an die Dose (1) angepaßte Dichtungsvorrichtung (4), die wenigstens einen Kautschukzylinder zwischen der Dose (1) und der Nadel (2) enthält.

5. Maschine nach Anspruch 4,
**dadurch gekennzeichnet,**
daß ein Rückschlagventil (9) in das genannte Verbindungsstück (7) engefügt ist, um jeglichen Rückfluß von Flüssigkeit und Gas von dem genannten Behälter (8) in Richtung auf die genannte Nadel (2) zu verhindern.

6. Maschine nach einem der Ansprüche 4 und 5,
**dadurch gekennzeichnet,**
daß die genannte Dichtungsvorrichtung (4) zwei koaxiale und einander berührende Kautschukzylinder von verschiedenen Härtegraden enthält, von denen der eine den anderen umgibt (4.1, 4.2)

7. Maschine nach einem der Ansprüche 4 bis 6,
**dadurch gekennzeichnet,**
daß die genannte Dichtungsvorrichtung (4) zwischen der Dose (1) und einer Schulter (6) der Nadel (2) angeordnet ist.

8. Maschine nach einem der Ansprüche 4 bis 7,
**dadurch gekennzeichnet,**
daß sie darüber hinaus einen Kompressor (13) umfaßt, der den Druck im Rückgewinnungsbehälter (8) mit Hilfe eines Druckreglers (14) beeinflußt, um durch Absaugung die im genannten Behälter (8) vorhandenen Gase herauszuziehen.

9. Maschine nach einem der Ansprüche 4 bis 8,
**dadurch gekennzeichnet,**
daß die Nadel (2) mit einer Injektionsöffnung (10) versehen ist, welche in der genannten Nadel eine Spülung mit dem Aerosolprodukt sicherzustellen erlaubt.

10. Maschine nach einem der Ansprüche 4 bis 9,
**dadurch gekennzeichnet,**
daß die genannten Mittel zur Einführung und Halterung der Dosen (1) eine Trommel (20) enthalten, welche in die horizontale Achse geneigt ist und mit einer Vielzahl von Fächern versehen ist, die den Abmessungen der Dosen entsprechend angepaßt und einstellbar sind.
